# EUROPEAN PATENT SPECIFICATION

(11) **EP 3 901 059 B1**
(45) Date of publication and mention of the grant of the patent: **27.08.2025**
(21) Application number: 20762563.3
(22) Date of filing: 28.01.2020
(51) Int. Cl.: B65D 83/08, A47K 10/38

(54) **STORAGE CONTAINER FOR SANITARY TISSUE PAPER**
AUFBEWAHRUNGSBEHÄLTER FÜR HYGIENE-TISSUEPAPIER
RÉCIPIENT DE STOCKAGE POUR PAPIER HYGIÉNIQUE

(30) Priority: 28.02.2019 JP 2019036656
(43) Date of publication of application: 27.10.2021
(73) Proprietor: DAIO PAPER CORPORATION, Shikokuchuo-shi Ehime 799-0492 (JP)
(72) Inventor: UTSUNOMIYA, Tatsuya, Shikokuchuo-shi, Ehime 799-0113 (JP)
(74) Representative: Meissner Bolte Partnerschaft mbB
(86) International application number: PCT/JP2020/002922
(87) International publication number: WO 2020/174977

(56) References cited:
- JP-A- 2002 166 981
- JP-A- 2012 066 862
- JP-A- 2018 140 810
- JP-A- 2018 140 810
- JP-A- H10 101 092
- JP-A- H11 263 384
- US-A- 4 534 491
- US-A1- 2016 000 276

## Description

### Technical Field

The present invention relates to a storage container for sanitary tissue paper to store sanitary tissue paper such as wet sheets and wet tissues.

### Background Art

There have been conventionally known storage containers for sanitary tissue paper to store sanitary tissue paper for wiping floors and toilets in houses, human bodies, or the like.

As a storage container for sanitary tissue paper, there has been known a storage container for sanitary tissue paper that includes a detachable outlet portion in which an outlet is formed, so that a resistance is applied to sanitary tissue paper by this outlet and the sanitary tissue paper is cut off along perforations provided in the sanitary tissue paper (for example, see patent document 1).

### Citation List

### Patent Literature

[Patent Document 1] JP 5850521 B
[Patent Document 2] JP 2018 140810 A
[Patent Document 3] JP H10 101092 A

### Summary of Invention

### Technical Problem

In such a storage container for sanitary tissue paper, in order to enable continuous use of sanitary tissue paper, when a sheet of the sanitary tissue paper is cut off along perforations, the subsequent sheet of the sanitary tissue paper needs to be held with the end thereof protruding from the outlet, without falling into the container.

However, when a higher resistance is applied to the sanitary tissue paper by the outlet in order to secure a sufficient holding function, the protruding amount from the outlet of the subsequent sheet of sanitary tissue paper is reduced and taking out the subsequent sheet becomes difficult in some cases.

An object of the present invention is to provide a storage container for sanitary tissue paper that achieves both of reliability of holding the sanitary tissue paper in the outlet and easiness of operation of taking out the sanitary tissue paper.

### Solution to Problem

In order to achieve the object, according to the invention recited in claim 1, there is provided a storage container for sanitary tissue paper including:
a container body inside which sanitary tissue paper is stored; and
a lid that is detachably attached to the container body and that has an outlet portion to take out the sanitary tissue paper stored in the container body, wherein
the outlet portion includes:
   an outlet through which the sanitary tissue paper is inserted and which holds the sanitary tissue paper with an end of the sanitary tissue paper protruding from an upper surface of the outlet portion; and
   a chamfered portion that is a corner which is chamfered, the corner being formed by a lower surface of the outlet portion and a hole wall of the outlet, whereby the chamfered portion is a flat chamfered portion in which the hole wall of the outlet is chamfered to be a flat face, wherein the size of the chamfered portion is set such that the length L1 in the width direction of the outlet from the hole wall of the outlet is within the range of 0.5 mm to 1.0 mm and the length L2 in the height direction from the lower surface of the outlet is within the range of 0.5 mm to 1.0 mm, wherein L1 equals L2 (L1 = L2).

According to the present invention, it is possible to have a configuration that achieves both of reliability of holding the sanitary tissue paper in the outlet and easiness of operation of taking out the sanitary tissue paper.

According to the invention, there is provided the storage container for the sanitary tissue paper according to claim 1, wherein the chamfered portion is a flat chamfered portion in which the hole wall of the outlet is chamfered to be a flat face.

According to the present invention, it is possible to easily form a chamfered portion.

According to the invention recited in claim 2, there is provided the storage container for the sanitary tissue paper according to claim 1, wherein, in the outlet, an opening area on a lower end side is larger than an opening area on an upper end side.

According to the present invention, it is possible to enhance the easiness of operation of taking out the sanitary tissue paper.

According to the invention recited in claim 3, there is provided the storage container for the sanitary tissue paper according to any one of claims 1 to 2, wherein the outlet is formed by a radial cut.

According to the present invention, it is possible to enhance the reliability of holding the sanitary tissue paper in the outlet.

According to the invention recited in claim 4, there is provided The storage container for the sanitary tissue paper according to any one of claims 1 to 3, wherein
the lid includes a hole portion in an upper surface, and
the outlet portion includes a narrow portion that is provided on a lateral surface, and an edge of the hole portion is fitted to the narrow portion to attach the outlet portion to the lid.

According to the present invention, it is possible to avoid easy detachment of the outlet portion from the lid.

### Advantageous Effects of Invention

According to the present invention, it is possible to provide a storage container for sanitary tissue paper that achieves both of reliability of holding the sanitary tissue paper in the outlet and easiness of operation of taking out the sanitary tissue paper.

### Brief Description of Drawings

FIG. 1 is a perspective view of a storage container for sanitary tissue paper according to an embodiment.
FIG. 2 is a cross-sectional view in the II-II portion of FIG. 1.
FIG. 3 is a perspective view of an outlet portion of the storage container for sanitary tissue paper according to the embodiment.
FIG. 4 is a bottom view of the outlet portion.
FIG. 5 is a cross-sectional view in the V-V portion of FIG. 4.
FIG. 6 is a view for explaining the shape of a chamfered portion, and is a cross-sectional view in the VI-VI portion of FIG. 5.
FIG. 7 is a view for explaining the shape of a chamfered portion not forming part of the invention.

### Description of Embodiments

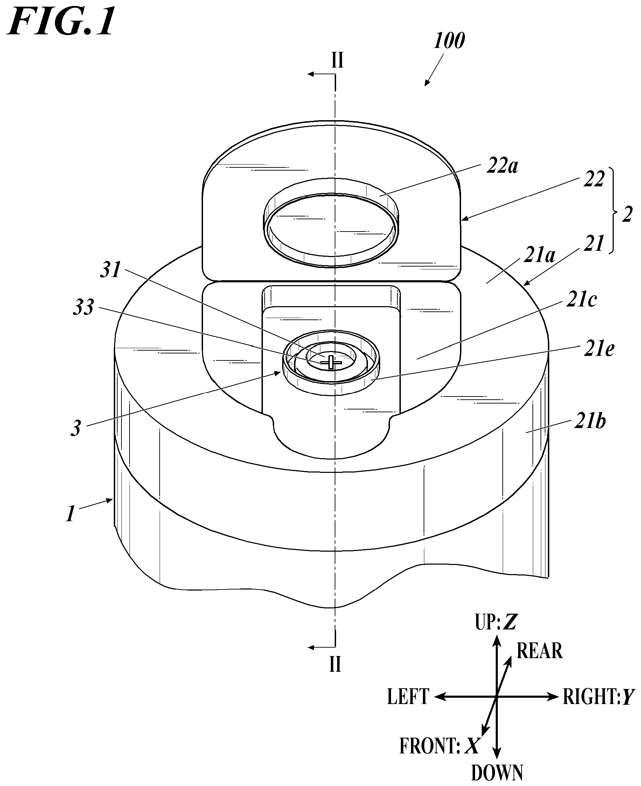

Hereinafter, the specific embodiment of a storage container for sanitary tissue paper 100 (storage container 100 for sanitary tissue paper) that is an embodiment of the present invention will be described with reference to FIGS. 1 to 6. However, the technical scope of the present invention is not limited to the illustrated examples.

In the following description, the front-rear direction, left-right direction and up-down direction, and the X-axis, Y-axis and Z-axis are defined as shown in FIG. 1. That is, in a storage container for sanitary tissue paper 100, the side on which the sanitary tissue paper is taken out and the side opposite thereto are respectively referred to as up and down, the front side in a plan view of the storage container for sanitary tissue paper 100 and the side opposite thereto are respectively referred to as front and rear, the right side when the observer faces rearward is referred to as right, the left side when the observer faces rearward is referred to as left, the axis along the front-rear direction is referred to as the X-axis, the axis along the left-right direction is referred to as the Y-axis, and the axis along the up-down direction is referred to as the Z-axis.

### <Configuration of Embodiment>

### (Entire Configuration)

As shown in FIG. 1, the storage container for sanitary tissue paper 100 includes: a container body 1 inside which sanitary tissue paper (for example, roll paper such as wet sheets or wet tissues wound into a roll) is stored; a lid 2 that is detachably attached to the container body 1; and an outlet portion 3 that is detachably attached to the lid 2.

Since the lid 2 is configured to be attachable and detachable with respect to the container body 1, it is possible to store the sanitary tissue paper inside the container body 1 and take out the sanitary tissue paper from inside, in a state in which the lid 2 is removed from the container body 1.

The sanitary tissue paper is stored in the container body 1 in a state in which the sanitary tissue paper is wound into a roll around an axis along the up-down direction. The sanitary tissue paper has perforations at regular intervals in a length direction, and the user uses a sheet of sanitary tissue paper which was cut off along the perforations.

### (Container Body)

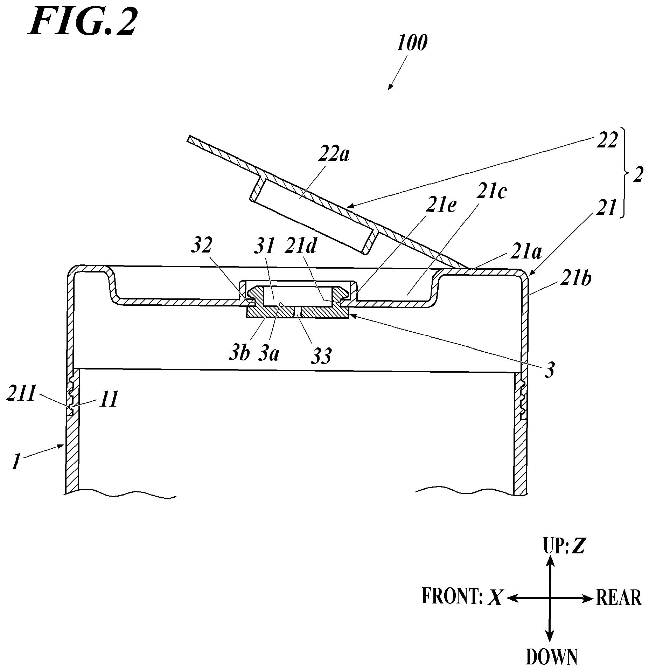

The container body 1 is a container for storing the sanitary tissue paper, which is formed in a bottomed cylindrical shape and has an opening in the upper surface. A male screw portion 11 is provided along the circumferential direction on the outer circumferential surface of the upper end portion of the lateral surface, as shown in FIG. 2.

The container body 1 is formed of PE (polyethylene), PP (polypropylene), PET (polyethylene terephthalate), ABS resin, or the like, for example.

The container body 1 is formed in a cylindrical shape that is a circle in a plan view with a diameter of 60 mm to 200 mm, preferably 65 mm to 110 mm, and is 175 mm to 200 mm, preferably 175 mm to 185 mm in the Z-axis direction (height), and has a thickness of each surface of 0.05 mm to 10 mm, preferably 0.1 mm to 5 mm.

### (Lid)

As shown in FIGS. 1 and 2, the lid 2 is configured by a lid main body 21 and a small lid 22.

The lid main body 21 is formed of PE (polyethylene), PP (polypropylene), PET (polyethylene terephthalate), ABS resin, or the like, for example. The lid main body 21 is in a cylindrical shape in which the lower surface is open, and includes a top surface 21a, a lateral surface 21b, a recessed portion 21c that is formed to be recessed downward on the inner circumferential side in a plan view of the top surface 21a, a hole portion 21d, and a main-body-side wall 21e that is provided to rise in a cylindrical shape so as to surround the hole portion 21d inside the recessed portion 21c.

The lid main body 21 is formed in a cylindrical shape that is a circle in a plan view with a diameter of 60 mm to 200 mm, preferably 65 mm to 110 mm, and is 15 mm to 50 mm, preferably 33 mm to 45 mm in the Z-axis direction (height), and has a thickness of each surface of 0.05 mm to 10 mm, preferably 0.1 mm to 5 mm.

A female screw portion 211 into which the male screw portion 11 of the container body 1 screws is provided on the internal circumferential surface of the lower end of the lateral surface 21b. Thus, as shown in FIG. 2, the container body 1 and the lid 2 have an attachable and detachable connection structure via the male screw portion 11 and the female screw portion 211, which allows the lid 2 to be detached from the container body 1.

### (Recessed Portion)

The recessed portion 21c is formed to have a nearly same shape in a plan view as the small lid 22 when the small lid 22 is closed, so that the small lid 22 can fit into the recessed portion 21c. The recessed portion 21c is formed to have the front end larger than the front end of the small lid 22 in a plan view so as to leave a slight gap even in a state in which the small lid 22 is fitted into the recessed portion 21c. Thus, it is possible to get a finger caught on the small lid 22 by using the gap.

### (Hole Portion)

The hole portion 21d is a hole formed in a circle in a plan view in the nearly center in a plan view of the lid main body 21 and leading to the inside of the storage container for sanitary tissue paper 100. The hole portion 21d is formed to be slightly smaller than the outlet portion 3 in a plan view and the outlet portion 3 is fixed to the hole portion 21d as mentioned later.

### (Main-body-side Wall)

The main-body-side wall 21e is formed to protrude upward in a cylindrical shape inside the recessed portion 21c, so as to surround the hole portion 21d. The main-body-side wall 21e is formed to have the outer diameter same as or slightly smaller than the internal diameter of a small-lid-side wall 22a formed in the small lid 22.

### (Small Lid)

The small lid 22 is formed of PE (polyethylene), PP (polypropylene), PET (polyethylene terephthalate), ABS resin, or the like, for example. The small lid 22 has the end connected to the lid main body 21, and includes the small-lid-side wall 22a protruding from the lower surface at the time of closing. The small lid 22 is formed such that the shape in a plan view when the small lid 22 is closed nearly matches the shape of the recessed portion 21c and the small lid 22 can be fitted to the recessed portion 21c when the small lid 22 is closed.

### (Small-lid-side Wall)

The small-lid-side wall 22a is formed in a cylindrical shape protruding downward when the small lid 22 is closed. The small-lid-side wall 22a is formed to have the internal diameter same as or slightly larger than the outer diameter of the main-body-side wall 21e. Thus, when the small lid 22 is closed, the small-lid-side wall 22a can fit to the main-body-side wall 21e, and it is possible to maintain airtightness of the space surrounded by the small-lid-side wall 22a and the main-body-side wall 21e, and thus maintain airtightness of the space inside the storage container for sanitary tissue paper 100 that is connected to the space via the hole portion 21d.

In the present embodiment, the airtightness inside the storage container for sanitary tissue paper 100 is maintained by fitting the main-body-side wall 21e to the small-lid-side wall 22a. However, any configuration different from the above is possible as long as the configuration can maintain the airtightness inside the storage container for sanitary tissue paper 100.

In a case where the sanitary tissue paper to be stored is not soaked with chemical solution or the like and does not need to avoid drying, any configuration not especially including an air tightness measure may be used.

### (Outlet Portion)

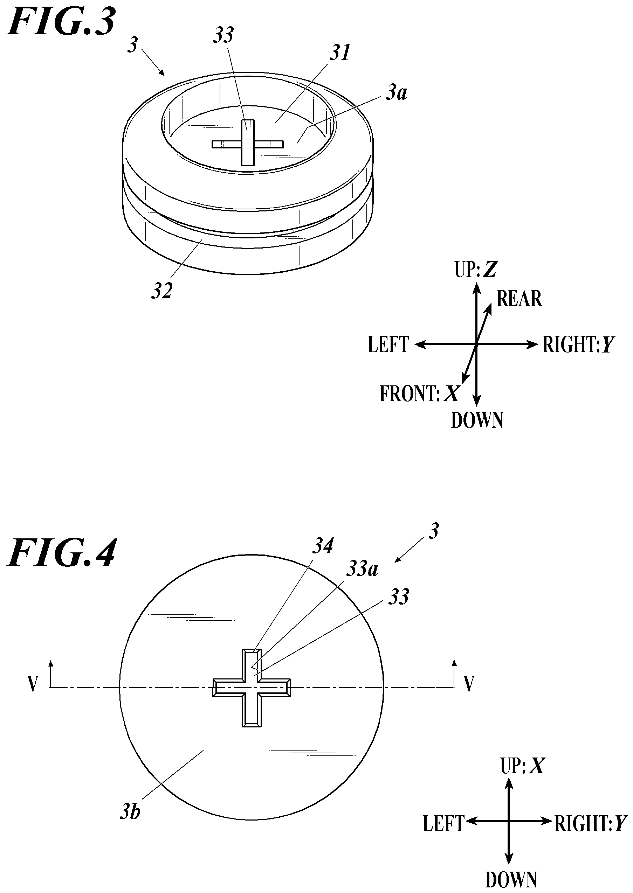

As shown in FIGS. 3 and 4, the outlet portion 3 is an elastically deformable member that is formed in a nearly round pillar shape which is a circle in a plan view. The outlet portion 3 can be formed by an injection molding, for example.

To be specific, the outlet portion 3 includes a recess 31 formed in the center in a plan view, a narrow portion 32 formed on the lateral surface, an outlet 33 formed in the nearly center in a plan view of the recess 31, and chamfered portions 34 formed by chamfering the edges of the outlet 33 on the lower surface 3b.

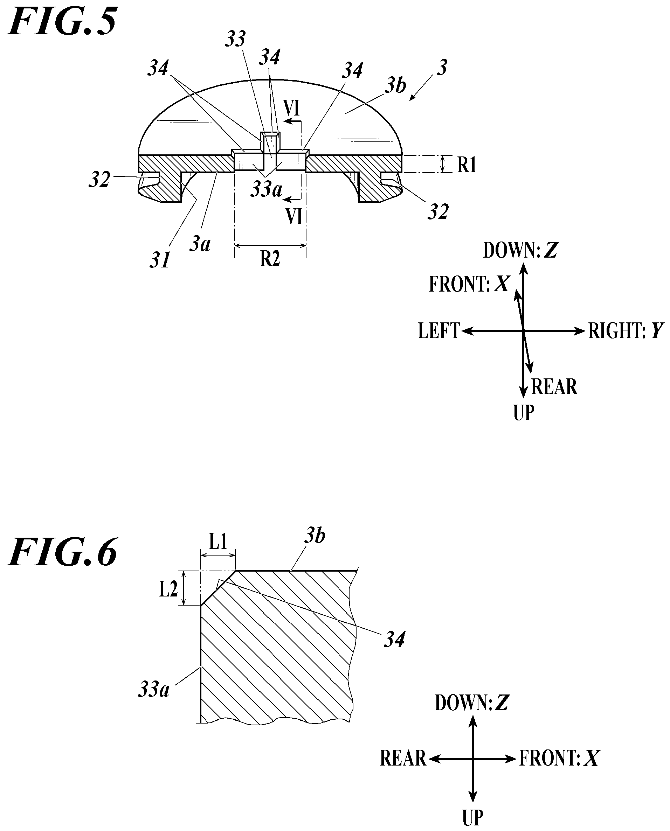

The outlet portion 3 is a circle that is slightly larger than the hole portion 21d between one tenth to one third inclusive the diameter of the lid main body 21 in a plan view, and the thickness R1 in the Z-axis direction (see FIG. 5) excluding the recess 31 is 2.0 mm to 10.0 mm, preferably 3.0 mm to 7.0 mm.

### (Recess)

On the upper surface of the outlet portion 3, the recess 31 is formed to be recessed downward in a circle from the upper view, leaving the peripheral portion. The recess 31 is formed such that the internal bottom surface 3a is a flat face.

### (Narrow Portion)

The narrow portion 32 is formed in a groove shape recessed in a radial direction to have a depth between one twentieth and one tenth inclusive the diameter of the outlet portion 3 in a plan view, surrounding the nearly central portion in the up-down direction of the lateral surface of the outlet portion 3 along the circumferential direction. Since the outlet portion 3 is formed to be slightly larger than the hole portion 21d in a plan view as described above, by fitting the edge of the hole portion 21d into the narrow portion 32, it is possible to fix the outlet portion 3 to the lid main body 21.

### (Outlet)

The outlet 33 is a hole for taking out the sanitary tissue paper stored inside the container body 1.

The sanitary tissue paper is inserted through the outlet 33 from the lower side, and the outlet 33 holds the sanitary tissue paper with its end protruding from the upper surface of the outlet portion 3 (internal bottom surface 3a of the recess 31).

When the end of the sanitary tissue paper is in a state of protruding from the upper surface of the outlet portion 3, the protruding amount is 12 mm to 30 mm, preferably 15 mm to 25 mm. Such a protruding amount facilitates plucking with a general user's finger, and the taking-out operation can be performed easily.

The outlet 33 is formed by radial cuts. For example, in the case of FIG. 3, cross-shaped (radial) cuts are formed by forming two linear cuts in a cross shape. The entire length R2 of the outlet 33 (see FIG. 5) is 5 mm to 30 mm, preferably 10 mm to 15 mm. For example, the entire length R2 is set to approximately 15 mm that is equal to or greater than the width of an index finger of a general user. By forming the outlet 33 with the radial cuts in this way, it is possible to more enhance the reliability of holding the sanitary tissue paper in the outlet 33.

In FIG. 3, the case of forming the outlet 33 in a cross shape is described by illustration. However, the shape of the outlet 33 is not limited to this, and an arbitrary shape can be selected as long as the above function can be achieved. That is, the radial cuts may be formed by three or more linear cuts. The outlet 33 may be formed by a single linear cut, or may be formed in a circle, oval, nearly star shape or the like.

### (Chamfered Portion)

As shown in FIGS. 4 and 5, each of the chamfered portions 34 is a region obtained by chamfering the corner formed by the lower surface 3b of the outlet portion 3 and the hole wall 33a of the outlet 33.

To be specific, the chamfered portion 34 is a flat chamfered portion obtained by chamfering the edge of the hole wall 33a of the outlet 33 on the lower surface 3b of the outlet portion 3 with an inclined flat face. Thus, the outlet 33 has such a shape that the opening area on the lower end side is larger than the opening area on the upper end side.

As shown in FIG. 6, the size of the chamfered portion 34 is set such that the length L1 in the width direction (direction along the XY plane) of the outlet 33 from the hole wall 33a of the outlet 33 is within the range of 0.5 mm to 1.0 mm and the length L2 in the height direction (direction along the Z-axis direction) from the lower end of the outlet 33 is within the range of 0.5 mm to 1.0 mm.

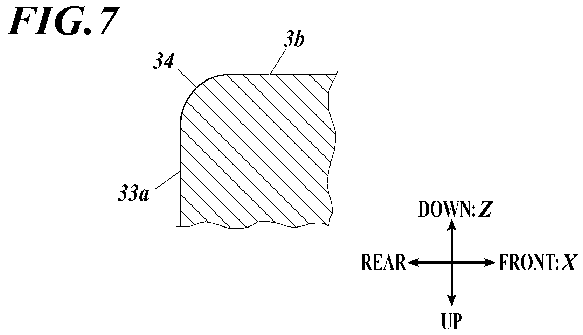

In the embodiment, the case of forming each of the chamfered portions 34 by chamfering to be a flat face has been described by illustration. However, as shown in FIG. 7 not forming part of the invention, the chamfered portion 34 may be a curved chamfered portion obtained by chamfering the corner, which is formed by the lower surface 3b of the outlet portion 3 and the hole wall 33a of the outlet 33, to be a convex curved face.

In a case where the force necessary to pull out the sanitary tissue paper in the above outlet portion 3 is measured 5 times by using a digital force gauge (manufactured by IMADA: model number DS2-200N) and the average value is defined as a resistance value, the value of such a resistance value is preferably within the range of 5 to 12 N, and more preferably 6 to 10 N.

When sanitary tissue paper wounded in a single roll (for example, continuous 80 sheets having 79 lines of perforations) is pulled out, the allowable range of the number of times (number of continuations) that a sheet is not cut along the perforations and the subsequent sheet of sanitary tissue paper comes out following the sheet is 10 times or less, and preferably 7 times or less.

### <Action of Embodiment>

In the above-mentioned storage container for sanitary tissue paper 100, by applying a resistance to the pulled-out sanitary tissue paper with the outlet 33, the sheet of the sanitary tissue paper to be used is cut off along the perforations, and the subsequent sheet of the sanitary tissue paper can be held with the end protruding from the outlet 33.

At this time, by having the chamfered portions 34, the resistance when the sanitary tissue paper passes through the outlet 33 is reduced compared to the case of not having the chamfered portions 34. Thus, it is possible to sufficiently secure the protruding amount of the subsequent sheet of sanitary tissue paper protruding from the outlet 33, and the force necessary for pulling out is also reduced, thus facilitating the taking-out operation.

### <Effect of Embodiment>

According to the present embodiment, in a storage container for sanitary tissue paper 100 including: a container body 1 inside which sanitary tissue paper is stored; and a lid 2 that is detachably attached to the container body 1 and that has an outlet portion 3 to take out the sanitary tissue paper stored in the container body 1, the outlet portion 3 includes: an outlet 33 through which the sanitary tissue paper is inserted and which holds the sanitary tissue paper with an end of the sanitary tissue paper protruding from the upper surface of the outlet portion 3 (internal bottom surface 3a of recess 31); and chamfered portions 34 each of which is a corner that is chamfered, the corner being formed by the lower surface 3b of the outlet portion 3 and the hole wall 33a of the outlet 33.

Thus, it is possible to have a configuration achieving both of reliability of holding the sanitary tissue paper in the outlet 33 and easiness of the operation of taking out the sanitary tissue paper.

According to the present embodiment, the chamfered portion 34 is a flat chamfered portion in which the hole wall 33a of the outlet 33 is chamfered to be a flat face.

Thus, it is possible to easily form the chamfered portion 34.

According to the present embodiment, in the outlet 33, an opening area on a lower end side is larger than an opening area on an upper end side.

Thus, it is possible to facilitate the operation of taking out the sanitary tissue paper.

According to the present embodiment, the outlet 33 is formed by radial cuts.

Thus, it is possible to enhance the reliability of holding the sanitary tissue paper in the outlet.

According to the present embodiment, the lid 2 includes a hole portion 21d in an upper surface, and the outlet portion 3 includes a narrow portion 32 provided on a lateral surface, and an edge of the hole portion 21d is fitted to the narrow portion 32 to attach the outlet portion 3 to the lid 2.

Thus, it is possible to avoid the outlet portion 3 from easily detaching from the lid 2.

### (Others)

The sanitary tissue paper stored in the storage container for sanitary tissue paper 100 is not necessarily limited to the sanitary tissue paper wounded in a roll. For example, there can be used so called pop-up type sheets that are laminated in a state of being folded in an alternate manner and formed such that, when one sheet of sanitary tissue paper is taken out, the next sheet of sanitary tissue paper is also pulled out to the outlet.

The shape of the storage container for sanitary tissue paper 100 may not necessarily be a cylindrical shape.

### Examples

Next, the results of evaluating the easiness of taking out the sanitary tissue paper for Examples of the present invention and Comparative Examples are described. Hereinafter, though the present invention is described specifically by the Examples, the present invention is not limited to them.

### <Sample Preparation>

### (Storage Container for Sanitary Tissue Paper)

As a storage container for sanitary tissue paper, there was prepared a container that has the shape shown in FIG. 1 and is made of polyethylene, the container having a container body and a lid that is detachably attached to the container body.

The outlet portion of each of the following Examples 1 and 2 and Comparative Examples 1 and 2 is attached to this storage container for sanitary tissue paper.

### (Examples 1, 2)

The outlet portion of each of the Examples 1, 2 has a shape shown in FIGS. 3 to 6, and made of elastomer.

The thickness in the Z-axis direction of the outlet portion is 3.0 mm excluding the recess.

The outlet is in a cross shape in a plan view and the entire length of the outlet is 29 mm in the upper surface view.

The lengths L1 and L2 of each of the chamfered portions were L1=L2=0.5 mm and L1=L2=1.0 mm in the Examples 1 and 2 respectively.

L1 is the length in the direction along the XY plane, and L2 is the length in the direction along the Z-axis.

### (Comparative Examples 1, 2)

The outlet portion in the Comparative Example 1 was same as that of the Example 1, except that the length L1 and L2 of the chamfered portion was L1=L2=1.5 mm.

The outlet portion in the Comparative Example 2 was same as that of the Example 1, except that the chamfered portion is not provided (that is, L1=L2=0mm).

### (Sanitary Tissue Paper)

As the sanitary tissue paper, a wet sheet that is wound in a roll and has perforations at regular intervals in the longitudinal direction was used. To be specific, the number of lines of perforations was 79 and the wet sheet having the 80 continuous sheets was used.

### <Evaluation>

By using the samples of the Examples 1 and 2 and the Comparative Examples 1 and 2, (1) Protruding amount of subsequent sheet of sanitary tissue paper, (2) Resistance value at the time of taking out and (3) Number of continuations were measured as follows and the results were shown in Table I.

### (1) Protruding Amount of Subsequent Sheet of Sanitary Tissue Paper

The above one wet sheet wound in a roll was pulled out by using the samples of the above Examples 1 and 2 and Comparative Examples 1 and 2, and the average value of measurements of the protruding amount of subsequent sheet in the wet sheet was calculated as a protruding amount of sanitary tissue paper.

### (2) Resistance Value when Sanitary Tissue Paper was Taken Out

The above wet sheet wound in a roll was pulled out by using the samples of the above Examples 1 and 2 and Comparative Examples 1 and 2, and the force necessary for the pulling out was measured by using the digital force gauge (manufactured by IMADA: model number DS2-200N). The measurement was performed 5 times for each sample, and the average value thereof was determined as the resistance value.

### (3) Number of Continuations

The above one wet sheet wound in a roll was pulled out by using the samples of the above Examples 1 and 2 and Comparative Examples 1 and 2, and the number of times that a sheet is not cut along the perforations and the subsequent sheet of sanitary tissue paper comes out following the sheet was counted as the number of continuations.

### [Table 1]

**TABLE I**

| | | Example 1 | Example 2 | Comparative Example 1 | Comparative Example 2 |
|---|---|---|---|---|---|
| Chamfered Amount (L1=L2) [mm] | | 0.5 | 1.0 | 1.5 | 0.0 |
| Evaluation | Protruding Amount [mm] | 21.4 | 22.5 | 33.9 | 10.2 |
| | Number of Continuations | 3.2 | 6.0 | 30.5 | 0.5 |
| | Resistance Value [N] | 7.0 | 5.9 | 4.4 | 13.1 |

The results of Table I show that the protruding amount of subsequent sheet of sanitary tissue paper is larger as the area of chamfered portion is larger, that is, as the values of L1 and L2 are larger.

In addition, it is found that, as the area of chamfered portion is larger, the force necessary to take out the sanitary tissue paper is reduced, but the number of continuations is increased.

In the case of Comparative Example 1, the number of continuations is excessively large, which is not preferable. In the case of Comparative Example 2, the protruding amount is excessively small, which is not preferable.

Therefore, by making the lengths L1 and L2 be 0.5 mm to 1.0 mm, it is possible to achieve both of the reliability of holding the sanitary tissue paper and the easiness of operation of taking out the sanitary tissue paper.

### Industrial Applicability

The present invention can be used as a storage container for sanitary tissue paper to store the sanitary tissue paper therein, due to the configuration described above.

### Reference Signs List

- 1: container body
- 11: male screw portion
- 2: lid
- 21: lid main body
- 21a: top surface
- 21b: lateral surface
- 21c: recessed portion
- 21d: hole portion
- 21e: main-body-side wall
- 211: female screw portion
- 22: small lid
- 22a: small-lid-side wall
- 3: outlet portion
- 3a: internal bottom surface
- 3b: lower surface
- 31: recess
- 32: narrow portion
- 33: outlet
- 33a: hole wall
- 34: chamfered portion
- 100: storage container for sanitary tissue paper

## Claims

1. A storage container (100) for sanitary tissue paper comprising:
a container body (1) inside which sanitary tissue paper is stored; and
a lid (2) that is detachably attached to the container body (1) and that has an outlet portion (3) that is detachably attached to the lid (2) to take out the sanitary tissue paper stored in the container body (1), wherein
the outlet portion (3) includes:
an outlet (33) through which the sanitary tissue paper is inserted and which holds the sanitary tissue paper with an end of the sanitary tissue paper protruding from an upper surface (3a) of the outlet portion (3); and
a chamfered portion (34) that is a corner which is chamfered, the corner being formed by a lower surface (3b) of the outlet portion (3) and a hole wall (33a) of the outlet (33), whereby
the chamfered portion (34) is a flat chamfered portion in which the hole wall (33a) of the outlet (33) is chamfered to be a flat face,
wherein
the size of the chamfered portion (34) is set such that the length L1 in the width direction of the outlet (33) from the hole wall (33a) of the outlet (33) is within the range of 0.5 mm to 1.0 mm and the length L2 in the height direction from the lower surface (3b) of the outlet (33) is within the range of 0.5 mm to 1.0 mm, wherein L1 equals L2 ( L1 = L2).

2. The storage container (100) for the sanitary tissue paper according to claim 1, wherein, in the outlet (33), an opening area on a lower end side is larger than an opening area on an upper end side.

3. The storage container (100) for the sanitary tissue paper according to any one of claims 1 to 2, wherein the outlet (33) is formed by a radial cut.

4. The storage container (100) for the sanitary tissue paper according to any one of claims 1 to 3, wherein
the lid (2) includes a hole portion (21d) in an upper surface (21a), and
the outlet portion (3) includes a narrow portion (32) that is provided on a lateral surface, and an edge of the hole portion (21d) is fitted to the narrow portion (32) to attach the outlet portion (3) to the lid (2).

## Patentansprüche

1. Aufbewahrungsbehälter (100) für Hygienepapiertücher, umfassend:
einen Behälterkörper (1), in welchem das Hygienepapiertuch aufbewahrt wird; und
einen Deckel (2), der abnehmbar an dem Behälterkörper (1) befestigt ist und der einen Auslassabschnitt (3) aufweist, der abnehmbar an dem Deckel (2) befestigt ist,
um das in dem Behälterkörper (1) gelagerte Hygienepapiertuch zu entnehmen, wobei der Auslassabschnitt (3) Folgendes einschließt:
einen Auslass (33), durch den das Hygienepapiertuch eingeführt wird und der das Hygienepapiertuch so hält, dass ein Ende des Hygienepapiertuchs aus einer oberen Oberfläche (3a) des Auslassabschnitts (3) herausragt; und
einen abgeschrägten Abschnitt (34), der eine abgeschrägte Ecke ist, wobei die Ecke durch eine untere Oberfläche (3b) des Auslassabschnitts (3) und eine Lochwand (33a) des Auslasses (33) gebildet wird, wobei
der abgeschrägte Abschnitt (34) ein flacher abgeschrägter Abschnitt ist, in welchem die Lochwand (33a) des Auslasses (33) so abgeschrägt ist, dass er eine ebene Fläche ist, wobei
die Größe des abgeschrägten Abschnitts (34) so eingestellt ist, dass die Länge L1 in der Breitenrichtung des Auslasses (33) von der Lochwand (33a) des Auslasses (33) innerhalb des Bereichs von 0,5 mm bis 1,0 mm liegt und die Länge L2 in der Höhenrichtung von der unteren Oberfläche (3b) des Auslasses (33) innerhalb des Bereichs von 0,5 mm bis 1,0 mm liegt, wobei L1 gleich L2 ist (L1 = L2).

2. Aufbewahrungsbehälter (100) für Hygienepapiertücher nach Anspruch 1, wobei in dem Auslass (33) ein Öffnungsbereich an einer unteren Endseite größer ist als ein Öffnungsbereich an einer oberen Endseite.

3. Aufbewahrungsbehälter (100) für Hygienepapiertücher nach einem der Ansprüche 1 bis 2, wobei der Auslass (33) durch einen radialen Schnitt ausgebildet ist.

4. Aufbewahrungsbehälter (100) für Hygienepapiertücher nach einem der Ansprüche 1 bis 3, wobei
der Deckel (2) einen Lochabschnitt (21d) in einer oberen Oberfläche (21a) einschließt, und
der Auslassabschnitt (3) einen schmalen Abschnitt (32) einschließt, der an einer seitlichen Oberfläche vorgesehen ist, und eine Ecke des Lochabschnitts (21d) an dem schmalen Abschnitt (32) eingepasst ist, um den Auslassabschnitt (3) an dem Deckel (2) zu befestigen.

## Revendications

1. Récipient de stockage (100) pour du papier hygiénique comprenant :
un corps de récipient (1) à l'intérieur duquel du papier hygiénique est stocké ; et
un couvercle (2) qui est fixé de manière détachable au corps de récipient (1) et qui a une partie de sortie (3) qui est fixée de manière détachable au couvercle (2) pour extraire le papier hygiénique stocké dans le corps de récipient (1), dans lequel la partie de sortie (3) comprend :
une sortie (33) à travers laquelle le papier hygiénique est inséré et qui maintient le papier hygiénique avec une extrémité du papier hygiénique faisant saillie à partir d'une surface supérieure (3a) de la partie de sortie (3) ; et
une partie chanfreinée (34) qui est un coin qui est chanfreiné, le coin étant formé par une surface inférieure (3b) de la partie de sortie (3) et une paroi de trou (33a) de la sortie (33), moyennant quoi
la partie chanfreinée (34) est une partie chanfreinée plate dans laquelle la paroi de trou (33a) de la sortie (33) est chanfreinée pour être une face plate,
dans lequel
la taille de la partie chanfreinée (34) est définie de telle sorte que la longueur L1 dans la direction de largeur de la sortie (33) à partir de la paroi de trou (33a) de la sortie (33) soit dans la plage de 0,5 mm à 1,0 mm et la longueur L2 dans la direction de hauteur à partir de la surface inférieure (3b) de la sortie (33) soit dans la plage de 0,5 mm à 1,0 mm, dans lequel L1 est égale à L2 (L1 = L2).

2. Récipient de stockage (100) pour le papier hygiénique selon la revendication **1,** dans lequel, dans la sortie (33), une zone d'ouverture sur un côté d'extrémité inférieur est plus grande qu'une zone d'ouverture sur un côté d'extrémité supérieur.

3. Récipient de stockage (100) pour le papier hygiénique selon l'une quelconque des revendications 1 et 2, dans lequel la sortie (33) est formée par une découpe radiale.

4. Récipient de stockage (100) pour le papier hygiénique selon l'une quelconque des revendications 1 à 3, dans lequel
le couvercle (2) comprend une partie trou (21d) dans une surface supérieure (21a), et
la partie de sortie (3) comprend une partie étroite (32) qui est fournie sur une surface latérale, et un bord de la partie trou (21d) est ajusté sur la partie étroite (32) pour fixer la partie de sortie (3) au couvercle (2).
